# EUROPEAN PATENT APPLICATION

(11) **EP 1 701 344 A1**
(43) Date of publication of application: **13.09.2006**
(21) Application number: 04819898.0
(22) Date of filing: 02.12.2004
(51) Int. Cl.: G11B 7/09, G11B 7/085, G11B 7/12, G11B 7/125

(54) **OPTICAL DISK DEVICE**

(30) Priority: 03.12.2003 JP 2003404154; 16.12.2003 JP 2003418110
(71) Applicant: MATSUSHITA ELECTRIC INDUSTRIAL CO., LTD., Kadoma-shi, Osaka 571-8501 (JP)
(72) Inventor: MIZUNO, Osamu Matsushita Electric Ind. Co., Ltd., Osaka 571-8501 (JP); NAKAMURA, Tohru Matsushita Electric Ind. Co., Ltd., Osaka 571-8501 (JP); AIKOH, Hideki Matsushita Electric Ind. Co., Ltd., Osaka 571-8501 (JP); HAYASHI, Takao Matsushita Electric Ind. Co., Ltd., Osaka 571-8501 (JP); WADA, Takuya Matsushita Electric Ind. Co., Ltd., Osaka 571-8501 (JP)
(74) Representative: Eisenführ, Günther
(86) International application number: PCT/JP2004/017948
(87) International publication number: WO 2005/055214

(57) **Abstract**

An optical disc apparatus includes a withdrawal means for moving an objective lens (32) to a position distant from an optical disc (1) during an inactive duration of intermittent recording or reproducing operation. A means for regulating or fixing the objective lens (32) at the position distant from the optical disc (1) is further provided. Thus, even in a noncontrolled state during the inactive duration, it is possible to prevent collision of the objective lens (32) with the optical disc (1). As a result, both power saving and safety of the apparatus can be attained.

## Description

### Technical Field

The present invention relates to optical disc apparatuses for recording or reproducing audio and images or recording or reproducing various data for computers, etc. For example, the present invention relates to an optical disc apparatus of a portable type, which has a function of operating intermittently in order to reduce its power consumption.

### Background Art

In response to recent trends to more compact optical disc apparatuses, portable optical disc apparatuses operating on batteries have come into general use. In this connection, various proposals are made on technology of so-called "intermittent operation" designed to reduce power consumption of the optical disc apparatuses for the purpose of increasing operating time of the batteries.

For example, a first prior art document Japanese Patent Laid-Open Publication No. 5-342585 (1993) discloses a basic idea in which data is recorded or reproduced at a rate higher than a data rate of information of an optical disc so as to produce an inactive duration of recording or reproduction such that power consumption of the apparatus is restrained by performing intermittent operation that power supply is stopped during this inactive duration.

Meanwhile, a second prior art document Japanese Patent Laid-Open Publication No. 6-243578 (1994) discloses a technique in which power consumption of the apparatus is restrained by performing intermittent operation that, during the inactive duration, rotations of the optical disc are restricted or light emission from a laser is stopped. Furthermore, a third prior art document Japanese Patent Laid-Open Publication No. 7-65507 (1995) discloses a technique in which power consumption of the apparatus is restrained by performing intermittent operation that rotations of the optical disc and optical servo operation are stopped during the inactive duration.

In all the conventional optical disc apparatuses referred to above, by exchanging, via a buffer memory, with outside the data recorded or reproduced at the high rate, operating power of the apparatus is reduced without affecting apparent recording operation or reproducing operation so as to lengthen service life of the batteries such that portability of the apparatus is upgraded.

Meanwhile, in response to recent demand for higher density of the optical disc, a laser beam of shorter wavelength and an objective lens of larger numerical aperture (NA) have been provided in optical heads used for recording and reproduction. However, an objective lens system having large NA generally comes closer to the optical disc. Thus, a working distance between the objective lens and the optical disc, which is set for the objective lens, decreases. In addition, since an incident luminous flux system of the objective lens shows a trend towards smaller size in order to make the optical disc as a whole more compact, the working distance tends to decrease further and may reach a value of about 0.1 mm.

In such a small working distance, a problem arises that it is basically difficult to avoid collision between the objective lens and the optical disc completely. In case focusing of the objective lens relative to the optical disc having opposite planar deflections of ±A from a mean surface of "0" is performed, the objective lens cannot be disposed at such a position as to bring the objective lens out of contact with the optical disc absolutely if the working distance is smaller than 2A. Therefore, in a state where servo operation is not being performed, contact between the objective lens and the optical disc may happen a number of times during a short period, thereby possibly resulting in heavy damage or hitting traces instantaneously. As a result, deterioration of optical properties of the objective lens or the optical disc may pose a problem in recording and reproduction. A fourth prior art document Japanese Patent Laid-Open Publication No. 9-63095 (1997) proposes a countermeasure against this problem. In this countermeasure, a projection confronting the recording medium is integrally formed at an outer peripheral portion of the objective lens so as to protect the objective lens. Meanwhile, a fifth prior art document Japanese Patent Laid-Open Publication No. 6-302001 (1994) also recites a similar example. The fourth and fifth prior art documents have a gist that a portion projecting from the objective lens is provided in the vicinity of the objective lens so as to avoid direct contact between the optical disc and the objective lens.

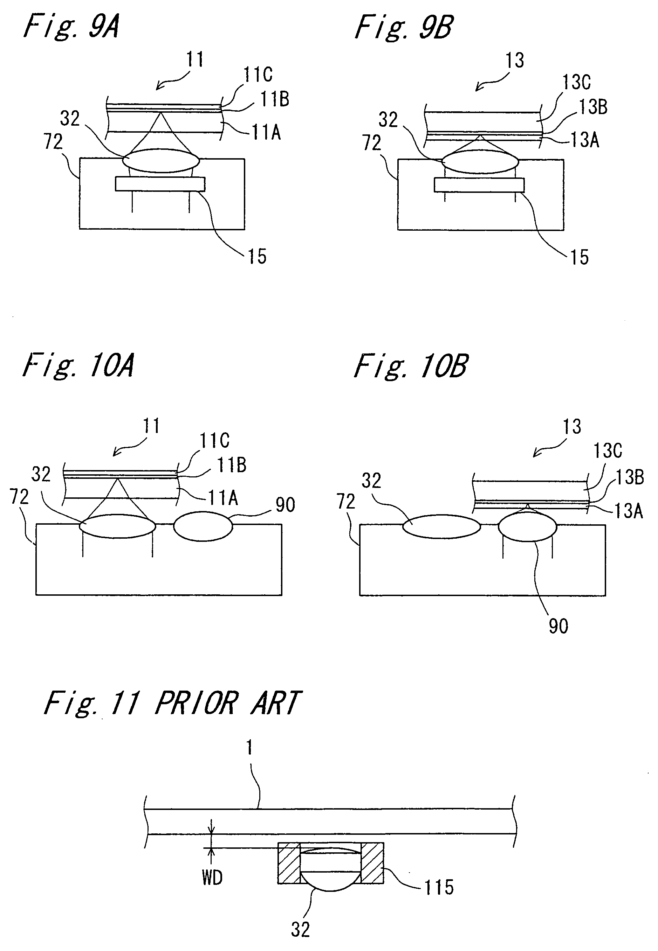

Fig. 11 shows a main portion of these known examples in which a working distance WD between an objective lens 32 and an optical disc 1 is set for the objective lens 32. An annular protective ring 115 is provided around the objective lens 32 and a distal end of the protective ring 115 adjacent to the optical disc 1 is set higher than a top of the objective lens 32 such that the objective lens 32 does not project from the protective ring 115 towards the optical disc 1. By this arrangement, the objective lens 32 is not brought into direct contact with the optical disc 1 and thus, is not damaged. Meanwhile, if material and surface treatment of the protective ring 115 are selected properly, possibility of damage to the optical disc 1 can be lessened.

### Disclosure of Invention

### (Problems to be solved by the Invention)

However, in intermittent operation in the conventional optical disc apparatuses of the first to third prior art documents, since rotations of the optical disc or turning on of the laser and servo operation are stopped or restricted during the inactive duration for nonperformance of recording or reproduction of the data, various control operations of the optical disc apparatuses are stopped or restricted during the inactive duration.

In the optical disc apparatuses of this kind, a beam emitted from the laser is condensed onto the optical disc by the objective lens so as to record or reproduce the data on the optical disc. Here, usually, an objective lens actuator for arbitrarily changing a distance between the objective lens and the optical disc holds the optical disc such that operational performances of the optical disc apparatuses can be secured even if the optical disc have planar deflections. The objective lens actuator is operated by a control signal based on a focusing error signal detected from the optical disc such that control for maintaining the distance between the objective lens and the optical disc, i.e., focusing servo is performed.

If the control operations of the optical disc apparatuses are stopped or restricted during the inactive duration for nonperformance of recording or reproduction of the data as described above, application of external vibrations or impacts to the optical disc apparatuses during the inactive duration may incur a problem fatal to recording or reproduction of the data due to damage to the objective lens and the optical disc upon collision of the objective lens with the optical disc.

Meanwhile, the third prior art document discloses an embodiment in which only focusing servo is not stopped even during the inactive duration. However, in this embodiment, since ON state of the laser cannot be stopped in order to obtain the focusing error signal, power consumption cannot be reduced sufficiently.

The conventional optical disc apparatuses of the fourth and fifth prior art documents have the following disadvantage. Namely, in Fig. 11, collision of the protective ring 115 with the optical disc 1 can be avoided by servo operation when a power source is in ON state. However, if the optical disc 1 is retained in the optical disc apparatus in OFF state of the power source, such a case may happen in which the protective ring 115 is held in contact with the optical disc 1. For example, since a focusing mechanism of the objective lens actuator usually is not balanced with gravitational force, the protective ring 115 may come into contact with the optical disc 1 when the optical disc apparatus of portable type is merely turned over. If condensation, etc. occur in this state, stains of condensation traces will remain on the optical disc 1 due to impurities, etc.

Especially, in the portable optical disc apparatus, if the power source is turned off in a state where the optical disc 1 is retained in the optical disc apparatus, such an inconvenience may be incurred that free vibrations of the objective lens 32 due to lack of resistance of the objective lens 32 to disturbances bring the protective ring 115 into collision with the optical disc 1 a plurality of times. The portable optical disc apparatus is usually carried vibratingly by turning off the power source in a loading state of the recording medium. Collisions can happen at an identical location of the optical disc several tens of times per second or hundreds of thousands of times in an hour in the worst case according to a natural resonant frequency of the objective lens actuator, etc. Therefore, damage to the optical disc caused by such collisions is also nonnegligible.

Meanwhile, in recent optical discs, the NA is becoming larger than that of conventional optical discs. However, in view of their so-called "compatibility" for enabling handling of also the conventional optical discs, an optical disc apparatus usable for a plurality of the NAs becomes necessary. Usually, cover layers of these optical discs have different thicknesses.

For example, in order to materialize an optical disc apparatus for performing recording and reproduction on two kinds of optical discs having different NAs, a method may be employed in which two objective lenses are used. Since the many conventional optical discs are designed for an objective lens having a small NA and a large working distance, the optical discs are considered to be primarily kept out of contact with the objective lens. Therefore, consideration has not been specifically given to damage to the optical disc due to its collision with the objective lens.

However, in recent years, the working distance of the objective lens is required to be reduced as described above. Thus, when an optical disc apparatus compatible with the two kinds of the optical discs is materialized, such a possibility arises that the objective lens having the small working distance of the new standards collides with the optical disc of the conventional standards having no measure against its collision with the objective lens.

Conventionally, deterioration of the optical properties of the optical disc caused by the condensation traces of the optical disc due to the ineffective known collision measure and damage to the optical disc due to its vibratory collision in OFF state of the power source has been a serious problem.

The present invention has for its object to provide, with a view to eliminating the above mentioned drawbacks of prior art, a low-power optical disc apparatus in which even if control operation is stopped during an inactive duration of recording or reproduction of data in intermittent operation, it is possible to avoid collision between an objective lens and an optical disc caused by external vibrations or impacts.

### (Means for solving the Problems)

In order to accomplish this object of the present invention, an optical disc apparatus of the present invention for recording or reproducing information by illuminating a beam onto an optical disc through an objective lens held by an objective lens actuator includes an objective lens withdrawal means for withdrawing the objective lens away from the optical disc when focusing servo operation is not being performed. In this optical disc apparatus, the objective lens withdrawal means may include the objective lens actuator and a drive control circuit for controlling the objective lens actuator such that the objective lens actuator withdraws the objective lens to a position distant from the optical disc on the basis of a control signal from the drive control circuit.

Alternatively, the objective lens withdrawal means may include the objective lens actuator, a drive control circuit for controlling the objective lens actuator and an objective lens fixture for fixing the objective lens such that not only the objective lens actuator withdraws the objective lens to a position distant from the optical disc on the basis of a control signal from the drive control circuit but the objective lens fixture fixes the objective lens at the position.

In another optical disc apparatus of the present invention including a light emitting device, an objective lens for condensing onto an optical disc a beam emitted by the light emitting device, an objective lens actuator capable of driving the objective lens in a direction substantially perpendicular to the optical disc, a photodetector for receiving the beam returning upon its second transmission through the objective lens after having been reflected from the optical disc so as to output information and an error signal of the optical disc, a drive control circuit for controlling the objective lens actuator such that the objective lens actuator displaces the objective lens relative to the optical disc and an objective lens fixture for fixing the objective lens driven by the objective lens actuator such that by recording or reproducing, at a rate higher than a data rate of information to be recorded or reproduced, the information, an inactive duration of the recording or the reproduction is produced, not only the objective lens actuator withdraws the objective lens to a position distant from the optical disc on the basis of a control signal from the drive control circuit but the objective lens fixture fixes the objective lens at the position, during the inactive duration.

### (Effects of the Invention)

In the optical disc apparatus of the present invention, since not only the objective lens never collides with the optical disc even when servo operation is not being performed but the optical disc is not damaged even under strong disturbances, long-time reliability of recorded data can be upgraded simply and easily at low cost.

Meanwhile, in the optical disc apparatus of the present invention, information to be recorded or reproduced is recorded or reproduced at a rate higher than a data rate of the information so as to produce an inactive duration of the recording or the reproduction and a means for withdrawing the objective lens to a position distant from the optical disc during this inactive duration is provided. Thus, even if external vibrations or impacts are applied to the optical disc apparatus, collision of the objective lens with the optical disc can be prevented, so that it is possible to prevent unstable recording and reproducing operations due to damage to the optical disc caused by the collision. Therefore, portability and power saving of the optical disc apparatus can be further enhanced.

### Brief Description of Drawings

Fig. 1 is a mimetic diagram showing a schematic structure of an optical disc apparatus according to a first embodiment of the present invention.
Fig. 2 is an enlarged sectional view of an objective lens actuator employed in the optical disc apparatus of Fig. 1.
Fig. 3 is a mimetic diagram showing a schematic structure of an optical disc apparatus according to a second embodiment of the present invention.
Fig. 4 is an enlarged sectional view of an objective lens actuator and an objective lens fixture employed in the optical disc apparatus of Fig. 3.
Fig. 5 is a view similar to Fig. 4, particularly showing a state in which position of an objective lens is restrained.
Figs. 6A, 6B and 6C are views showing states in which an aberration correcting lens is disposed at one end of an ordinary feed range, at the other end of the ordinary feed range and in an expanded correction range, respectively in an optical disc apparatus according to a third embodiment of the present invention.
Fig. 7 is a diagram explanatory of relation between planar deflection of an optical disc and working distance in the optical disc apparatus of Fig. 6.
Figs. 8A, 8B and 8C are schematic sectional views showing three structural examples of the optical disc usable in the optical disc apparatus of Fig. 6, respectively.
Figs. 9A and 9B are schematic sectional views showing states for performing reproduction on two of the three optical discs of Fig. 8 by using a single objective lens in the optical disc apparatus of Fig. 6, respectively.
Figs. 10A and 10B are schematic sectional views showing states for performing reproduction on two of the three optical discs of Fig. 8 by using two objective lenses in the optical disc apparatus of Fig. 6, respectively.
Fig. 11 is a schematic sectional view showing a structure of a prior art optical disc apparatus.

### Best Mode for Carrying Out the Invention

Hereinafter, embodiments of the present invention are described with reference to the drawings.

### (First embodiment)

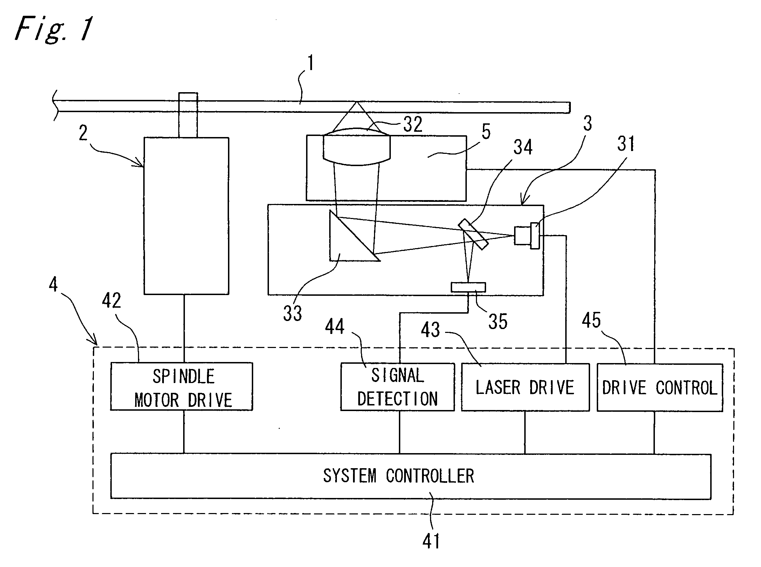

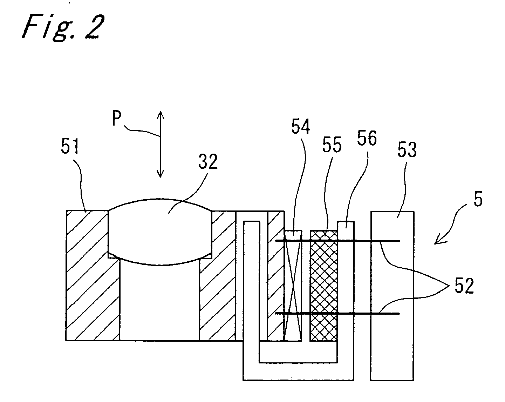

Fig. 1 shows a schematic structure of an optical disc apparatus according to a first embodiment of the present invention and Fig. 2 shows a schematic structure of an objective lens actuator 5 of this optical disc apparatus on an enlarged scale. As shown in Fig. 1, the optical disc apparatus of the first embodiment is roughly divided into a spindle motor (rotational drive portion) 2 for rotating an optical disc 1, an optical head 3 for recording or reproducing information on the optical disc 1 by illuminating a beam onto the optical disc 1 and a drive circuit 4 for controlling operation of the spindle motor 2 and the optical head 3. An objective lens actuator 5 is mounted on the optical head 3.

The optical head 3 includes a laser 31 for emitting a beam, an objective lens 32 for illuminating onto the optical disc 1 the beam emitted from the laser 31, a mirror 33 for changing towards the objective lens 32 a direction of the beam emitted from the laser 31, a beam splitter 34 for dividing in a direction other than that towards the laser 31 a beam reflected by the optical disc 1 and returned to the beam splitter 34 again via the objective lens 32 and the mirror 33 and a photodetector 35 for outputting information signals and error signals such as a focusing error signal on the optical disc 1 by receiving the beam divided by the beam splitter 34. The drive circuit 4 is mainly constituted by a system controller 41 for controlling operation of the whole optical disc apparatus and further includes a spindle motor drive circuit 42, a laser drive circuit 43, a signal detection circuit 44 and a drive control circuit 45.

One concrete example of an arrangement of the objective lens actuator 5 is described with reference to Fig. 2. As shown in Fig. 2, the objective lens 32 is mounted on a lens holder 51. The lens holder 51 is held by a fixed part 53 via support members 52 formed by metallic wires or leaf springs so as to be displaced towards and away from the objective lens 1 in the direction of the arrow P. A magnetic circuit having a coil 54, a magnet 55 and a yoke 56 is disposed in the vicinity of the lens holder 51. By energizing this magnetic circuit, the lens holder 51 is driven in the direction of the arrow P. Namely, in case the magnetic circuit is not energized, the lens holder 51 can be moved arbitrarily in the direction of the arrow P.

Hereinafter, operation of the optical disc apparatus of the first embodiment is described. In this optical disc apparatus, the spindle motor 2 is actuated by a command from the system controller 41 by way of the spindle motor drive circuit 42 so as to rotate the optical disc 1. Meanwhile, by actuating the laser drive circuit 43, the beam is emitted from the laser 31 and is illuminated onto the optical disc 1 through the objective lens 32. The beam reflected from the optical disc 1 by obtaining the focusing error information is received by the photodetector 35 and the focusing error signal is outputted from the signal detection circuit 44. In response to the focusing error signal from the signal detection circuit 44, the system controller 41 outputs to the drive control circuit 45 a control signal for displacing the objective lens 32 towards the optical disc 1 so as to eliminate the focusing error. On the basis of this control signal, the objective lens actuator 5 moves the objective lens 32 and therefore, an optimum focusing state is obtained. A series of such operations are focusing servo operation.

In this state, data is recorded or reproduced on the optical disc 1 by the beam illuminated onto the optical disc 1. At this time, recording or reproduction of the data is performed at a rate higher than an actual data rate so as to produce an inactive duration of the recording or the reproduction. During this inactive duration, the above focusing servo operation is stopped by a command of the system controller 41 so as to reduce power consumption of the optical disc apparatus as a whole.

Such cases may happen in which rotation of the optical disc 1 is stopped by stopping the spindle motor 2 and emission of the beam from the laser 31 is stopped by stopping operation of the laser drive circuit 43. Namely, in this specification, the term "inactive duration" is used to mean a duration of a state in which servo operation is also stopped.

As described above, the objective lens 32 is merely supported in the objective lens actuator 5 so as to be arbitrarily displaced in the direction of the arrow P. Therefore, in case vibrations or impacts are applied to the objective lens 32 from outside during the inactive duration in which the servo operation is stopped, the system controller 41 issues, immediately prior to entry into the servo inactive duration, to the drive control circuit 45 a command for moving the objective lens 32 away from the optical disc 1 such that the objective lens 32 does not collide with the optical disc 1. On the basis of this command, the objective lens 32 is forcibly spaced away from the optical disc 1 by operation of the magnetic circuit 54-56 of the objective lens actuator 5.

When data is recorded or reproduced again upon termination of the inactive duration by a command of the system controller 41, operation for spacing the objective lens 32 away from the optical disc 1 is cancelled by the drive control circuit 45 in response to the command of the system controller 41. Thus, the focusing servo operation referred to above and the recording or reproducing operation of the data are started again.

Namely, only during the inactive duration in which the optical disc apparatus performs recording operation or reproducing operation intermittently, the objective lens 32 is spaced away from the optical disc 1 so as to occupy a position for avoiding its collision with the optical disc 1.

### (Second embodiment)

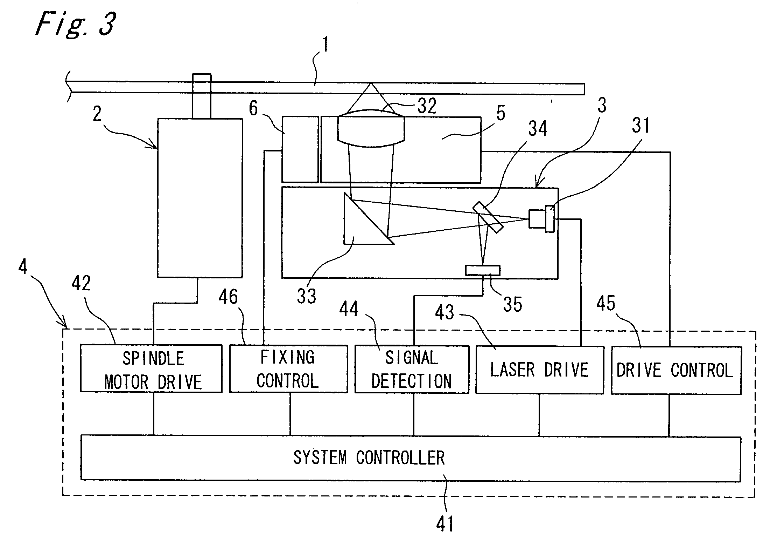

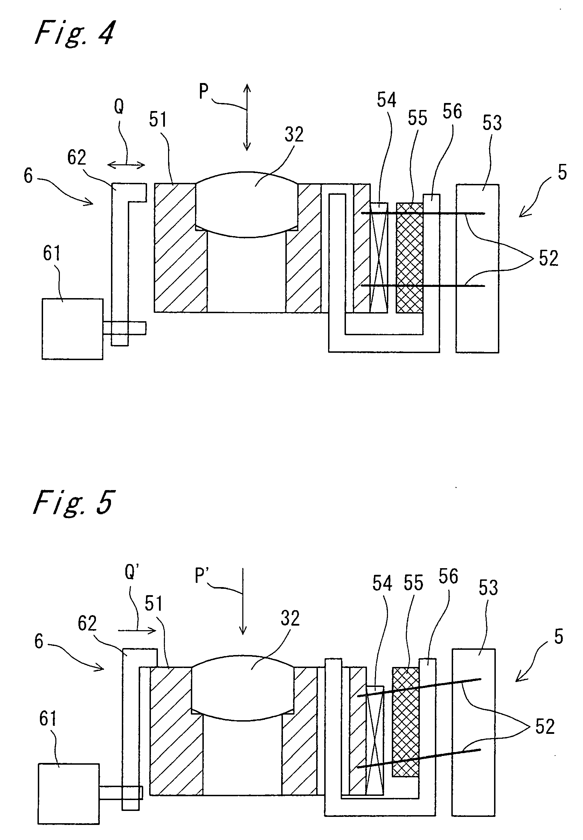

Hereinafter, a second embodiment of the present invention is described concretely. Figs. 3 and 4 schematically show an optical disc apparatus according to the second embodiment. This optical disc apparatus is has an arrangement fundamentally similar to that of the optical disc apparatus according to the first embodiment of Figs. 1 and 2 and like parts are designated by like reference numerals in the first and second embodiments.

As is clear from Fig. 3, its differences from the first embodiment of Figs. 1 and 2 reside in that additionally, an objective lens fixture 6 for fixing the objective lens 32 is provided on the optical head 3 and at a side of the objective lens actuator 5 and a fixing control circuit 46 for controlling the objective lens fixture 6 is provided in the drive circuit 4. As shown in Fig. 4, the objective lens fixture 6 includes a drive portion 61 formed by a stepper or a piezoelectric element and a stopper 62 which is displaced in the direction of the arrow Q by operation of the drive portion 61 so as to come close to or into contact with the lens holder 51 of the objective lens actuator 5. Since the stopper 62 is usually disposed away from the lens holder 51, the stopper 62 does not restrict movement of the lens holder 51.

Operation of the optical disc apparatus of the second embodiment is fundamentally similar to that of the optical disc apparatus of the first embodiment and thus, its detailed description is abbreviated. However, during the inactive duration of recording or reproduction, after the objective lens actuator 5 has withdrawn the objective lens 32 to a position distant from the optical disc 1 in response to a command from the drive control circuit 45, the fixing control circuit 46 further issues a command to the objective lens fixture 6 and the drive portion 61 is actuated based on this command so as to bring the stopper 62 close to or into contact with the lens holder 51 such that position of the objective lens 32 is restrained or fixed by the stopper 62. After the stopper 62 has retrained or fixed position of the lens holder 51, the lens holder 51 can be restrained or fixed at the position mechanically, so that an operation that the objective lens 32 is spaced away from the optical disc 1 by the objective lens actuator 5 is stopped on the basis of the command from the drive control circuit 45.

Namely, only during the inactive duration in which the optical disc apparatus performs recording operation or reproducing operation intermittently, the objective lens 32 is spaced away from the optical disc 1 so as to occupy a position for avoiding its collision with the optical disc 1. In addition, since the objective lens 32 is restrained or fixed at the position for avoiding its collision with the optical disc 1, it is possible to not only positively prevent collision of the objective lens 32 with the optical disc 1 but reduce electric power required for control operation of spacing the objective lens 32 away from the optical disc 1.

Fig. 5 shows a state in which during the inactive duration of the optical disc apparatus of the second embodiment, not only the objective lens 32 is spaced away from the optical disc 1 as shown by the arrow P' but position of the objective lens 32 is restrained by the objective lens fixture 6 as shown by the arrow Q'.

Meanwhile, in the first and second embodiments, the lens holder 51 is supported by the support members 52 formed by the leaf springs or the wires but may also be slidingly supported by a rod instead.

Meanwhile, in the second embodiment, the stopper 62 is linearly displaced by the drive portion 61 in the objective lens fixture 6. However, the stopper 62 may also be rotated by using a motor or the like and a plurality of the stoppers 62 may also be provided so as to grip the lens holder 51 therebetween.

### (Third embodiment)

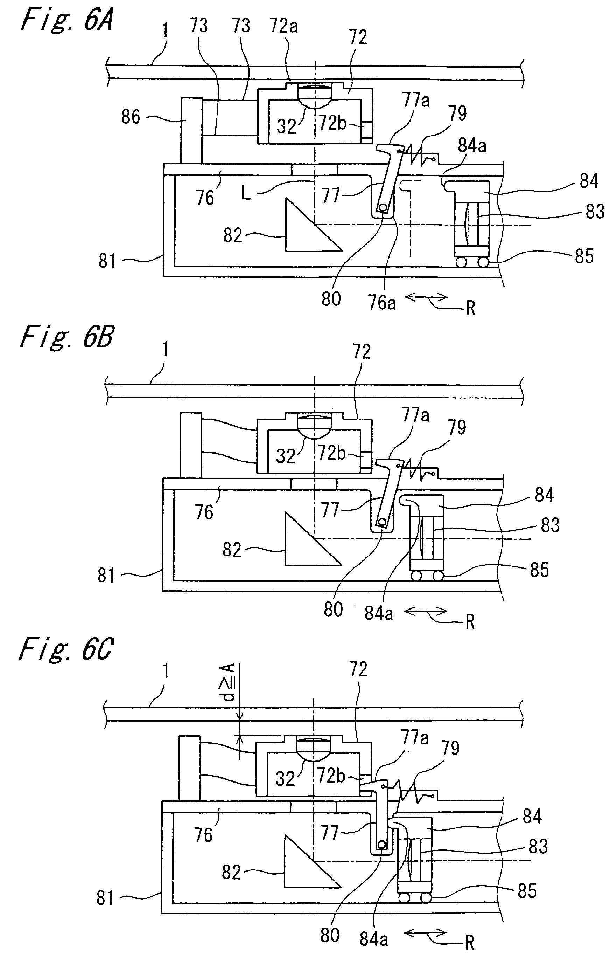

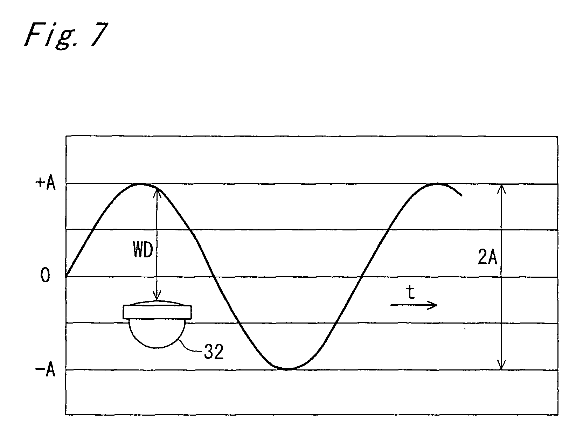

Figs. 6A to 6C show a schematic structure of an optical disc apparatus according to a third embodiment of the present invention. Fig. 7 shows changes of planar deflection of the optical disc 1 with time in the optical disc apparatus of Fig. 6. The planar deflection of the optical disc 1 can be substantially approximated to a sine curve and has an amplitude (±A) from an average plane "0". In the same manner as in prior art, a working distance WD set, for the objective lens 32, between the optical disc 1 and the objective lens 32 is smaller than the amplitude (2A) of the planar deflection of the optical disc 1, namely, WD<2A.

A lens holder 72 acting as the support members is formed by, for example, a tubular member and secures the objective lens 32 such that the objective lens 32 is brought into alignment with the lens holder 72. At this time, on one face of the lens holder 72 confronting the optical disc 1, a protective ring 72a for protecting the objective lens 32 is integrally formed with the lens holder 72. However, the protective ring 72a may also be a member separate from the lens holder 72 so as to be mounted on the lens holder 72. In the same manner as a protective ring 115 described earlier in prior art of Fig. 11, a distal end of the protective ring 72a adjacent to the optical disc 1 is set higher than a top of the objective lens 32 such that the protective ring 72a prevents contact of the objective lens 32 with the optical disc 1. Meanwhile, an opening 72b acting as an engageable portion is formed at a portion of the lens holder 72 adjacent to an optical stand 81 to be described later.

The lens holder 72 is made of resinous materials having comparatively high rigidity, low density and excellent form stability, preferably, liquid crystal polymer (LCP) or polyphenylene sulfide (PPS). A material having high hardness such as glass fiber should not be used as a reinforcement of the lens holder 72 such that the protective ring 72a does not damage the optical disc 1 upon its contact with the optical disc 1. However, carbon series materials can be used as the reinforcement of the lens holder 72.

In the ordinary objective lens actuator, four wire suspensions 73 are used. The suspensions 73 elastically connect the lens holder 72 and a fixed part 86 formed by a rigid body and supports the objective lens 32 such that the objective lens 32 is movable in a focusing direction, i.e., in a direction towards upper and lower ends of the drawing sheet and in a tracking direction, i.e., in a direction normal to the drawing sheet. A base 76 is formed by a material having high rigidity and is rigidly coupled with the fixed part 86. The base 76 is also continuous with the optical stand 81. A projection 76a is formed at a portion of the base 76. A locking arm 77 is attached to a lower end of the projection 76a by a pivotal pin 80. The locking arm 77 is pivotal about the pivotal pin 80 relative to the base 76 and is urged in the clockwise direction of Fig. 6 by a locking canceling spring 79 formed by an elastic member such as a coiled spring.

Meanwhile, a claw portion 77a is formed at a distal end of the locking arm 77 distant from the pivotal pin 80 so as to act as a mating engageable portion insertable into the opening 72b acting as the engageable portion. An engagement mechanism is constituted by the locking arm 77 having the claw portion 77a, the pivotal pin 80 and the locking canceling spring 79. The optical stand 81 through interior of which a laser beam L passes is formed by materials having high rigidity, for example, liquid crystal polymer (LCP), polyphenylene sulfide (PPS), zinc die casting or aluminum die casting. Usually, the optical stand 81 has a rising mirror 82 for bending an optical path. The optical stand 81 is mounted on the optical disc apparatus so as to be movable in a radial direction of the optical disc 1.

An aberration correcting lens 83 is mounted on an aberration correcting lens holder 84 for holding the aberration correcting lens 83. The aberration correcting lens 83 is movable in the direction of the arrow R in the optical stand 81 via the aberration correcting lens holder 84 by a feed mechanism 85. An aberration correcting mechanism is constituted by the aberration correcting lens 83, the aberration correcting lens holder 84 and the feed mechanism 85. Although not specifically shown, the feed mechanism 85 is concretely materialized by a guide means, for example, two shafts and a drive means, for example, a screw shaft and a stepping motor.

By moving the aberration correcting lens 83 in the direction of the arrow R by the feed mechanism 85, aberration of a beam spot converged upon the optical disc 1 is improved. For example, in case spherical aberration is corrected, diverging and converging angles of a luminous flux incident upon the objective lens 32 are changed. The laser beam L proceeding from a right side of Fig. 6 is transmitted through and refracted by the aberration correcting lens 83 and is reflected by the rising mirror 82 so as to travel upwardly. Then, the laser beam L is transmitted through and refracted by the objective lens 32 and is converged upon the optical disc 1 as the beam spot. The beam reflected from the optical disc 1 traces the reverse path.

A protrusion 84a is formed on the aberration correcting lens holder 84. In ordinary aberration correcting operation, the aberration correcting lens 83 has a feed range of between Fig. 6A and Fig. 6B. However, the feed mechanism 85 is arranged to be capable of moving the aberration correcting lens 83 and the aberration correcting lens holder 84 beyond the feed range of ordinary aberration correcting operation. Thus, the protrusion 84a is brought into contact with the locking arm 77 upon further leftward travel of the aberration correcting lens 83 and the aberration correcting lens holder 84 beyond the state of Fig. 6B. This range is referred to as an "extended correction range".

Although not specifically shown, a light emitting source such as a semiconductor laser diode, a detection system for detecting information signals reflected from the optical disc 1 and servo signals necessary for focusing operation and tracking operation, etc. are generally mounted on the optical stand 81. However, in order to make lighter in weight a movable optical system including the optical stand 81, lessen wiring load, prevent temperature rise, etc., such a case may happen in which the light emitting source and the detection system are not mounted on the optical stand 81. In addition, although not specifically shown, a coil or a magnet for receiving driving forces in the focusing direction and the tracking direction is mounted, as an electromagnetic drive means, on the lens holder 72 and a magnetic circuit for receiving a reaction force is provided on the base 76. The objective lens actuator is constituted by this electromagnetic drive means, the objective lens 32, the lens holder 72, the suspensions 73, the fixed part 86 and the base 76.

Hereinafter, operation of the optical disc apparatus having the above mentioned arrangement in this embodiment is described. Initially, in ordinary aberration correcting operation, the aberration correcting lens 83 is disposed in the range from Fig. 6A to Fig. 6B and does not enter into the extended correction range. At this time, the protrusion 84a is held out of contact with the locking arm 77.

Then, if a request for setting the apparatus to an inoperative state, for example, turning off of a power supply or power-saving waiting is made, the lens holder 72 is sufficiently spaced away from the optical disc 1 as shown in Fig. 6B. Thereafter, upon entry of the aberration correcting lens 83 into the extended correction range, the protrusion 84a is brought into contact engagement with the locking arm 77 and thus, pivots the locking arm 77 about the pivotal pin 80 in the counterclockwise direction in Fig. 6 against an urging force of the locking canceling spring 79 such that the claw portion 77a is brought into engagement with the opening 72b as shown in Fig. 6C. As a result, the lens holder 72 is locked to the base 76 such that the objective lens 32 does not come closer to the optical disc 1 from a predetermined distance therebetween. This state is referred to as a "spacing holding state" in which the objective lens 32 is held so as to be spaced away from the optical disc 1.

Positions and sizes of the lens holder 72, the locking arm 77, etc. are designed such that in this spacing holding state, a distance d between average positions of the protective ring 72a and the optical disc 1 is not less than the single amplitude A of the planar deflection of the optical disc 1 as shown in Fig. 6C. Then, if a request for turning on the power supply or recovering the apparatus from power-saving waiting is made, procedures opposite to those referred to above are fundamentally employed to cancel the spacing holding state. Initially, the aberration correcting lens holder 84 is moved in the rightward direction of Fig. 6C so as to be carried from the extended correction range to the feed range of ordinary aberration correcting operation. Thus, the locking arm 77 is pivoted about the pivotal pin 80 by the urging force of the locking canceling spring 79 applied to the locking arm 77 so as to pull out the claw portion 77a from the opening 72b. As a result, locking of the lens holder 72 to the base 76 is cancelled.

However, if the drive means of the focusing direction of the objective lens actuator is not controlled immediately after the claw portion 77a has been pulled out from the opening 72b, upward acceleration is imparted to the lens holder 72 by sudden release of elastic deformation energy of the suspensions 73 and thus, the lens holder 72 is quite likely to collide with the optical disc 1. Therefore, when the spacing holding state is cancelled, DC drive for moving the lens holder 72 away from the optical disc 1 is performed by the drive means of the focusing direction so as to prevent sudden displacement of the lens holder 72.

Meanwhile, in Fig. 6C, since the claw portion 77a is held in frictional engagement with the opening 72b, the spacing holding state may not be cancelled by only the elastic restoring force of the locking canceling spring 79 upon mere release of the protrusion 84a from the locking arm 77. However, since the lens holder 72 is driven in the direction away from the optical disc 1, the claw portion 77a is detached from the opening 72b, so that friction between the claw portion 77a and the opening 72b is eliminated and thus, the spacing holding state can be positively cancelled by the elastic restoring force of the locking canceling spring 79.

Furthermore, in case flow of DC through the objective lens actuator is not desirable in view of heat generation and electric power, it is also effective in cancellation of the spacing holding state that a DC component for moving the lens holder 72 away from the optical disc 1 is minimized and an AC signal component is applied in the focusing direction or the tracking direction in combination with the DC so as to vibrate the lens holder 72. Consequently, since frictional force between the claw portion 77a and the opening 72b drops upon change of the friction to dynamic friction, the spacing holding state can be cancelled by only the elastic restoring force of the locking canceling spring 79.

If a primary resonant frequency of the objective lens is employed as a frequency of the AC signal component, effect on electric power is quite efficient. After the spacing holding state has been cancelled, turning on of the power supply or recovery of the apparatus from power-saving waiting is completed upon transfer to focus pull-in operation of an ordinary servo system.

In this embodiment, the locking arm 77 is mounted on the base 76 of the objective lens actuator. Thus, even if inclination of the objective lens actuator relative to, for example, a reference plane of the optical disc 1 is adjusted from the base 76, relative position of the claw portion 77a and the opening 72b does not change, so that the adjustment can be performed easily. In addition, by using the AC signal at the time of cancellation of the spacing holding state, the apparatus can be reinstated to an operative state efficiently.

Meanwhile, in this embodiment, the aberration correcting mechanism is used as a means for driving the locking arm 77 but may be replaced by an actuator mounted on the base 76 differently. For example, a state in which the spindle motor for driving the optical disc 1 is not energized may be regarded as the inoperative state so as to enter into the spacing holding state. For example, in a state in which information is sufficiently stored in a buffer memory by reproduction of signals and is merely reproduced from a queue memory, the optical disc apparatus is outputting the information but is in the inoperative state when observed from an optical head, so that the spacing holding state can be started by stopping the spindle motor.

Meanwhile, this embodiment is effective for any one of optical disc apparatuses having large numerical aperture (NA), for example, an apparatus dedicated for high-density reproduction, an apparatus for phase change optical discs and an apparatus for magneto-optical disks and produces marked effects especially in a portable optical disc apparatus which is likely to sustain disturbances frequently. Also in an optical disc apparatus having a plurality of numerical apertures, noncontact use can be obtained in the inoperative state of the optical discs of conventional standards.

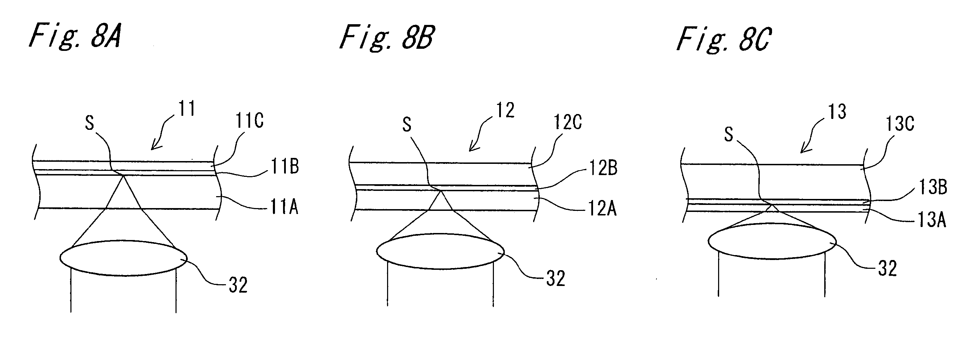

Figs. 8A to 8C show three structural examples of the optical disc 1 usable in the optical disc apparatus of this embodiment, respectively. Fig. 8A shows a compact disc (CD) 11 in which a substrate 11 A, a recording layer 11B and a protective layer 11C are arranged sequentially from the objective lens 32 and a beam spot S is formed on a lower face of the recording layer 11B. Fig. 8B shows a digital versatile disc (DVD) 12 in which a substrate 12A, a recording layer 12B and a protective layer 12C are arranged sequentially from the objective lens 32 and the beam spot S is formed on a lower face of the recording layer 12B. Fig. 8C shows a Blu-ray Disc 13 in which a cover layer 13A, a recording layer 13B and a substrate 13C are arranged sequentially from the objective lens 32 and the beam spot S is formed on a lower face of the recording layer 13B.

Figs. 9A and 9B show cases in which a divergence/convergence control element 15 is provided in the optical disc apparatus of this embodiment such that for example, the CD 11 and the Blu-ray Disc 13 are, respectively, reproduced by using the single objective lens 32 mounted on the lens holder 72. In this arrangement, the divergence/convergence control element 15 changes degree of divergence and convergence of a luminous flux in the CD 11 and the Blu-ray Disc 13 so as to change position of convergence of the luminous flux. The objective lens 32 has different first and second working distances relative to the CD 11 and the Blu-ray Disc 13, respectively. The CD 11 has a first travel distance between its uppermost position and its lowermost position, while the Blu-ray Disc 13 has a second travel distance between its uppermost position and its lowermost position, which is different from the first travel distance. At this time, a smaller one of the first and second working distances is set smaller than a larger one of the first and second travel distances. Furthermore, a distance between an average position of one face of the CD 11 adjacent to the objective lens 32 and a position of a distal end of the objective lens 32 and a distance between an average position of one face of the Blu-ray Disc 13 adjacent to the objective lens 32 and the position of the distal end of the objective lens 32 are so set as to be not less than a half of the larger one of the first and second travel distances. In the arrangement of Fig. 9, since the single objective lens 32 is used, disc follow-up characteristics are stabilized, so that mechanical design is facilitated and high-speed drive is enhanced.

Figs. 10A and 10B show cases in which the objective lens 32 and an objective lens 90 having different working distances are mounted on the lens holder 72 in the optical disc apparatus of this embodiment such that for example, the CD 11 and the Blu-ray Disc 13 are, respectively, reproduced by using the objective lenses 32 and 90. At this time, a smaller one of working distances of the objective lens 32 and 90 is set smaller than a larger one of the first travel distance of the CD 11 and the second travel distance of the Blu-ray Disc 13 in the same manner as Figs. 9A and 9B. Moreover, a distance between an average position of one face of the CD 11 adjacent to the objective lens 32 and a position of a distal end of the objective lens 32 and a distance between an average position of one face of the Blu-ray Disc 13 adjacent to the objective lens 90 and a position of a distal end of the objective lens 90 are so set as to be not less than a half of the larger one of the first and second travel distances. In the arrangement of Fig. 10, since the two objective lenses 32 and 90 are used, it is more difficult than the arrangement of Fig. 9 to stabilize high-frequency disc follow-up characteristics but optical design corresponding to the respective optical discs can be performed, so that optical characteristics such as quality of the beam spot are more excellent than those of the arrangement of Fig. 9. Industrial Applicability

In the optical disc apparatus of the present invention, since it is possible to physically avoid collision of the objective lens with the optical disc when focusing servo is not being performed, the present invention is useful for a portable optical disc apparatus which is likely to sustain external vibrations or impacts frequently.

Especially, in an optical disc apparatus which is usable for a high-density optical disc attracting keen attention recently, the objective lens has a large numerical aperture and the working distance between the objective lens and the optical disc is short, since frequency of collision of the objective lens with the optical disc is high due to external vibrations or impacts, the present invention is quite effective for such an optical disc apparatus.

The present invention is also useful for an optical disc apparatus which includes the objective lens, the support member for supporting the objective lens and the engagement mechanism for fixing the support member at the predetermined position.

Meanwhile, the CD, the DVD and the Blu-ray Disc are recited as examples of an optical disc usable in the present invention. However, it is needless to say that the present invention is not restricted to the CD, the DVD and the Blu-ray Disc but can also be applied to optical discs of other standards.

## Claims

1. An optical disc apparatus in which when focusing servo operation is not being performed, an objective lens is fixed at such a position as to be brought out of contact with an optical disc.

2. The optical disc apparatus as claimed in Claim 1, comprising:
an objective lens actuator for driving the objective lens; and
a drive control circuit for controlling the objective lens actuator;
wherein the objective lens actuator drives the objective lens to the position on the basis of a control signal from the drive control circuit.

3. The optical disc apparatus as claimed in Claim 1, comprising:
an objective lens actuator for driving the objective lens;
a drive control circuit for controlling the objective lens actuator; and
an objective lens fixture for fixing the objective lens;
wherein the objective lens actuator drives the objective lens to the position on the basis of a control signal from the drive control circuit and the objective lens fixture fixes the objective lens at the position.

4. The optical disc apparatus as claimed in Claim 3, wherein the optical disc fixture includes an engageable portion formed on a support member for supporting the objective lens and a mating engageable portion for securing, through its engagement with the engageable portion, the support member to a base continuous with an optical stand, with the mating engageable portion being provided on a locking member mounted pivotally on the base.

5. The optical disc apparatus as claimed in Claim 3 or 4, further comprising:
an aberration correcting mechanism for correcting aberration of a beam spot on the optical disc;
wherein the aberration correcting mechanism actuates the objective lens fixture.

6. The optical disc apparatus as claimed in Claim 5, wherein the aberration correcting mechanism has an extended correction range wider than a range necessary for aberration correction and actuates the objective lens fixture in the extended correction range.

7. The optical disc apparatus as claimed in Claim 3, wherein an electric current including an AC signal component is applied to the objective lens actuator such that fixing of the objective lens by the objective lens fixture is cancelled.

8. The optical disc apparatus as claimed in Claim 7, wherein the AC signal component contains a resonant frequency of the objective lens actuator.

9. The optical disc apparatus as claimed in Claim 3, wherein a DC flowing in a direction for moving the objective lens away from the optical disc is applied to the objective lens actuator such that fixing of the objective lens by the objective lens fixture is cancelled.

10. The optical disc apparatus as claimed in Claim 4, further comprising:
an elastic member for urging the mating engageable portion of the locking member in a direction for bringing the mating engageable portion out of engagement with the engageable portion.

11. The optical disc apparatus as claimed in one of Claims 1 to 3, wherein a working distance of the objective lens is smaller than an amplitude of a planar deflection of the optical disc.

12. The optical disc apparatus as claimed in Claim 11, wherein a distance between an average position of one face of the optical disc adjacent to the objective lens and a position of a distal end of the objective lens is so set as to be not less than a half of the amplitude of the planar deflection of the optical disc.

13. The optical disc apparatus as claimed in one of Claims 1 to 3, wherein an inactive duration is generated in transfer of information between the optical disc and an optical head by performing recording or reproduction of the optical disc at a transfer rate higher than an ordinary transfer rate such that the objective lens is fixed during the inactive duration.

14. The optical disc apparatus as claimed in one of Claims 1 to 3, wherein the objective lens has different first and second working distances relative to an optical disc including a cover layer and at least one further optical disc including a further cover layer having a thickness different from that of the cover layer of the optical disc, respectively;
wherein the optical disc has a first travel distance between its uppermost position and its lowermost position, while the further optical disc has a second travel distance between its uppermost position and its lowermost position, with the second travel distance being different from the first travel distance;
wherein a smaller one of the first and second working distances is set smaller than a larger one of the first and second travel distances;
wherein a distance between an average position of one face of the optical disc adjacent to the objective lens and a position of a distal end of the objective lens and a distance between an average position of one face of the further optical disc adjacent to the objective lens and the position of the distal end of the objective lens are so set as to be not less than a half of the larger one of the first and second travel distances.

15. The optical disc apparatus as claimed in one of Claims 1 to 3, further comprising:
at least one further objective lens having a further working distance different from a working distance of the objective lens;
wherein the objective lens and the further objective lens are usable for an optical disc including a cover layer and a further optical disc including a further cover layer having a thickness different from that of the cover layer of the optical disc, respectively;
wherein the optical disc has a first travel distance between its uppermost position and its lowermost position, while the further optical disc has a second travel distance between its uppermost position and its lowermost position, with the second travel distance being different from the first travel distance;
wherein a smaller one of the working distance and the further working distance is set smaller than a larger one of the first and second travel distances;
wherein a distance between an average position of one face of the optical disc adjacent to the objective lens and a position of a distal end of the objective lens and a distance between an average position of one face of the further optical disc adjacent to the further objective lens and a position of a distal end of the further objective lens are so set as to be not less than a half of the larger one of the first and second travel distances.
